Europäisches Patentamt

European Patent Office

Office européen des brevets

(19)

(11) **EP 1 345 173 A1**

(12) **EUROPEAN PATENT APPLICATION**
published in accordance with Art. 158(3) EPC

(43) Date of publication:
**17.09.2003  Bulletin 2003/38**

(51) Int Cl.⁷: **G06T 7/00**, G06K 9/00

(21) Application number: **00976373.1**

(86) International application number:
**PCT/JP00/08178**

(22) Date of filing: **20.11.2000**

(87) International publication number:
**WO 02/041253 (23.05.2002 Gazette 2002/21)**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **Omi, Masayuki**
**Mito-shi, Ibaraki 310-0851 (JP)**

(72) Inventor: **Omi, Masayuki**
**Mito-shi, Ibaraki 310-0851 (JP)**

(74) Representative: **Sties, Jochen, Dipl.-Ing.**
**Prinz & Partner**
**Patentanwälte**
**Manzingerweg 7**
**81241 München (DE)**

(54) **IDENTIFYING SYSTEM**

(57)    The present invention obtains the characteristics of the writing of a specific individual in three-dimensional or four-dimensional patterns when the passage of time is added as a factor, and is an invention which achieves a highly accurate personal identity confirmation function.

The present invention confirms personal identity by making the characteristics defined by the respective character handwriting patterns of the lower portion and the upper portion of the writing implement the comparison material of the personal identity confirmation. The two-point interval transmitted from the upper portion and the lower portion of the writing implement can be taken as a line segment, and by using the pattern of how this line segment moves as the subject of a comparison examination, a personal identity confirmation is carried out.

The personal identity confirmation system according to the present invention comprises transmission devices which transmit a signal such as a light signal or an electric signal or the like provided at the upper portion and the lower portion of a writing implement such as a ballpoint pen or the like, and a plurality of reception devices which receive the signals from said transmission devices provided in the vicinity of a recording medium on which writing is carried out, wherein the signals transmitted from said transmission devices are received by three or more reception devices as prescribed signals that include the arrival time at said reception devices due to the recognizable change in the wavelength or change in the frequency from the upper portion and the lower portion of said writing implement.

Fig. 1

## Description

## TECHNICAL FIELD

The present invention is basically an invention which achieves high quality personal identity confirmation, wherein a writing implement such as a ballpoint pen or the like is recognized in advance as a line segment, and a signature is obtained as line segments instead of being obtained as points, whereby distinctive features at the time a specific individual signs are recorded and stored, and wherein a learning function for automatically updating distinctive features is internally provided depending on the case. The present invention is an invention in which the writing pattern near the writing surface of the writing implement also uses the writing pattern of the upper portion of the writing implement from the base to confirm whether or not a signature is the handwriting of a specific individual.

## PRIOR ART TECHNOLOGY

Prior art personal identity confirmation has been carried out by possessing a certificate of one's seal impression, carrying a driver's license, verifying fingerprints, comparing and recognizing retinal patterns and the like.

Further, research and development in personal identity confirmation have recently undergone advances based on fingerprint verification, retinal verification, writing patterns, writing pressure and the like.

The present invention obtains the characteristics of the writing of a specific individual in three-dimensional or four-dimensional patterns when the passage of time is added as a factor, and is an invention which achieves a highly accurate personal identity confirmation function.

The present invention confirms personal identity by making the characteristics defined by the respective character handwriting patterns of the lower portion and the upper portion of the writing implement the comparison material of the personal identity confirmation. The two-point interval transmitted from the upper portion and the lower portion of the writing implement can be taken as a line segment, and by using the pattern of how this line segment moves as the subject of a comparison examination, a personal identity confirmation is carried out.

Further, the position of the transmission point can be obtained as three-dimensional coordinates based on the time it takes to reach each reception point and/or the reception angle.

## SUMMARY OF THE INVENTION

In the present invention, when the personal characteristics of a recording operation of signatures and the like possessed by people are to be scientifically acquired, the movement of the lower portion of a writing implement, namely, the writing habit is naturally obtained, and personal characteristics also appear in the movement of the upper portion of the writing implement due to the angle with the portion where the writing implement is held. Further, it is also possible to additionally acquire the characteristics of the synchronized temporal paths of the writing process of the upper portion and the lower portion of the writing implement, and this makes a four-dimensional acquisition possible.

Namely, the personal identity confirmation system according to the present invention comprises transmission devices which transmit a signal such as a light signal or an electric signal or the like provided at the upper portion and the lower portion of a writing implement such as a ballpoint pen or the like, and a plurality of reception devices which receive the signals from said transmission devices provided in the vicinity of a recording medium on which writing is carried out, wherein the signals transmitted from said transmission devices are received by three or more reception devices as prescribed signals that include the arrival time at said reception devices due to the recognizable change in the wavelength or change in the frequency from the upper portion and the lower portion of said writing implement.

Further, in the personal identity confirmation system disclosed in Claim 1, the intersection points of spherical equations in which distances obtained by multiplying the calculated arrival times of each reception point in Claim 1 by the signal velocity form radii or the intersection points of straight lines according to the angle of the reception points and the transmission points are calculated as three-dimensional coordinates in order to acquire writing features, and when said intersection points can not be calculated, the approximate three-dimensional coordinates are calculated by a compensation calculation which carries out small value adjustments, and the continuous paths thereof are calculated, and these continuous paths are stored as personal identity data, or the time of the changing paths of the intersection points in addition to said continuous paths are stored as personal identity data.

Furthermore, in the personal identity confirmation system disclosed in Claim 1, the calculated arrival times of each reception point in Claim 1 and the angle of the left and right upper portion and lower portion facing the vertical line between the transmission points and the reception points are measured in order to acquire writing features, and the intersection points of straight lines drawn toward the transmission points from the two lowest reception points are calculated as three-dimensional coordinates, and when said intersection points can not be calculated, the approximate three-dimensional coordinates are calculated by a compensation calculation, and the continuous paths thereof are calculated, and these continuous paths are stored as personal identity data, or the time of the changing paths of the intersection points in addition to said continuous paths are stored as personal identity data.

Moreover, in the personal identity confirmation system disclosed in Claim 2 or Claim 3, the continuous path of the line segment from the upper portion transmission point of the writing implement to the lower portion transmission point of the writing implement calculated by Claim 2 or Claim 3 is calculated, and this continuous path is stored as personal identity data, or the time of the changing path of the line segment in addition to said continuous path are stored as personal identity data.

Further, the personal identity confirmation system according to the present invention calculates the handwriting of a person for which confirmation is required by any of the methods of Claim 1 through Claim 4 in the case where personal identity needs to undergo actual confirmation, compares such handwriting with previously stored personal identity data obtained by the personal identity confirmation system, and determines whether or not the handwriting is that of a specific individual.

Further, the personal identity confirmation system according to the present invention calculates the handwriting of a person for which confirmation is required by any of the methods of Claim 1 through Claim 4 in the case where personal identity needs to undergo actual confirmation, compares such handwriting with personal identity data previously stored on the Internet, and determines whether or not the handwriting is that of a specific individual.

In the present invention, when the personal characteristics of a recording operation of signatures and the like possessed by people are to be scientifically acquired, the movement of the lower portion of a writing implement which has been used up to now, namely, the writing habit is naturally obtained, and personal characteristics also appear in the movement of the upper portion of the writing implement due to the angle with the portion where the writing implement is held. Further, by also acquiring the characteristics of the synchronized temporal paths of the writing process of the upper portion and the lower portion of the writing implement, a four-dimensional confirmation of personal identity becomes possible, and this achieves effects making it possible to roughly reliably identify a specific individual by a simple method in which the specific individual merely writes a signature or the like, and these effects can be used as a central function of the IT revolution.

Examples of the concrete effects are listed below.

(1) The confirmation of a specific individual can be carried out easily without a special operation being imposed on the specific individual, and this makes it possible to reliably identify oneself from the general public.

(2) By incorporating personal writing patterns in identification documents such as IC cards and the like which are to be issued by, for example, the Japanese Ministry of International Trade and Industry which is a government office, because this can be mass produced and used as low-priced information security without requiring a large-scale apparatus, it has a useful function as an essential item of an IT management social system.

(3) When settling accounts of banks and public offices such as government and municipal offices and the like, business has been conducted by the possessor of authority affixing a private seal or the like, but there is doubt as to whether such settlement is actually carried out by the specific individual having authority, but a secure processing system is achieved by the present system.

(4) Currently, a reliable personal identity confirmation is sought in view of the damages of several tens of billion yen from personal identity misrepresentation, credit card forgery and the like, but the present system guarantees personal identity confirmation.

(5) Even by only possessing a universal information pen, it is possible to form a part of the verification that a person is positively a specific individual. By providing various color pens, such pens will also become status symbols of status or the like.

(6) Instead of only signatures in the universal information pen, it is possible to supply information required for social living such as addresses, various personal histories, living environments and the like as separate objects in the personal identity confirmation.

(7) Even if the universal information pen is lost, the confirmation of personal identity is carried out by a signature, and this forms an extremely secure system.

## BRIEF DESCRIPTION OF THE DRAWINGS

Fig. 1 shows the structure of the personal identity confirmation system according to the present invention.

Fig. 2-1 shows a system flowchart (spherical radial distance method according to the explanatory drawings of Fig. 3 and Fig. 4) of the personal identity confirmation system according to the present invention.

Fig. 2-2 shows a flowchart (transmission point angle method according to the explanatory drawing of Fig.

5) of the personal identity confirmation system according to the present invention.

Fig. 3 is an explanatory drawing for describing the apparatus which recognizes signatures and the like of the personal identity confirmation system according to the present invention.

Fig. 4 is an explanatory drawing for describing the apparatus which recognizes signatures and the like of the personal identity confirmation system according to the present invention.

Fig. 5 is an explanatory drawing for describing the apparatus which recognizes signatures and the like of the personal identity confirmation system according to the present invention.

Fig. 6 is an explanatory drawing showing the paths of the upper portion and the lower portion of a universal information storage pen of the personal identity confirmation system according to the present invention.

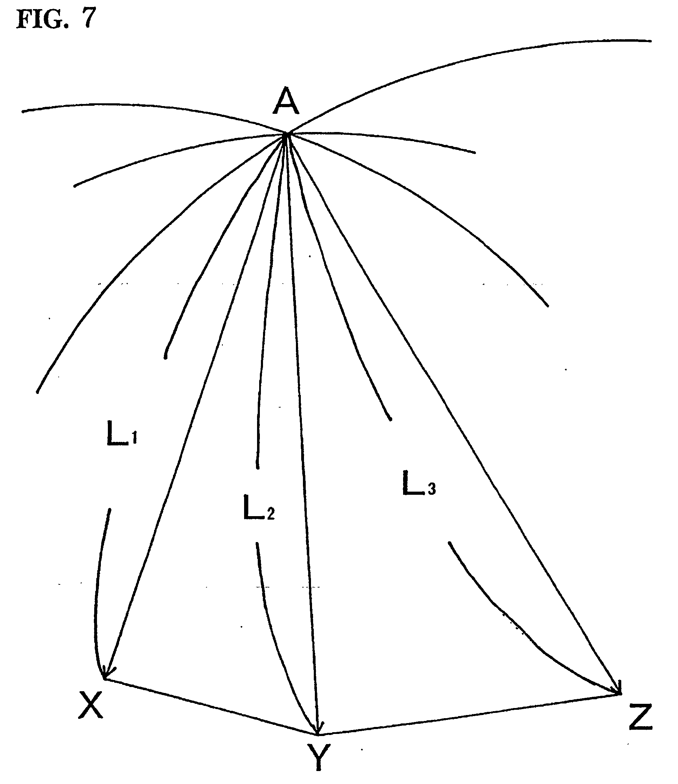

Fig. 7 is an explanatory drawing for calculating the distances $L_1$, $L_2$, $L_3$ for point A.

**PREFERRED EMBODIMENTS OF THE INVENTION**

The preferred embodiments of the present invention will be described below with reference to the drawings.

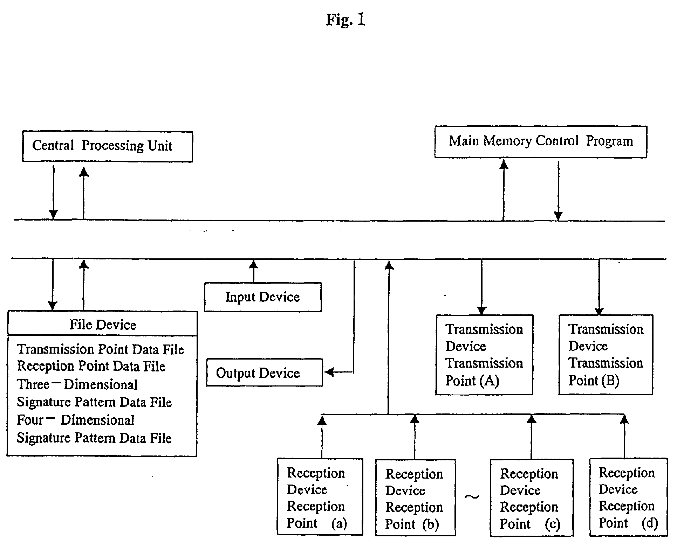

Fig. 1 is a system configuration drawing of the personal identity confirmation system according to the present invention.
Fig. 1 shows the relationship of the information link between a central processing unit and a file device, a main memory, an input device, an output device, a transmission device, and a reception device.

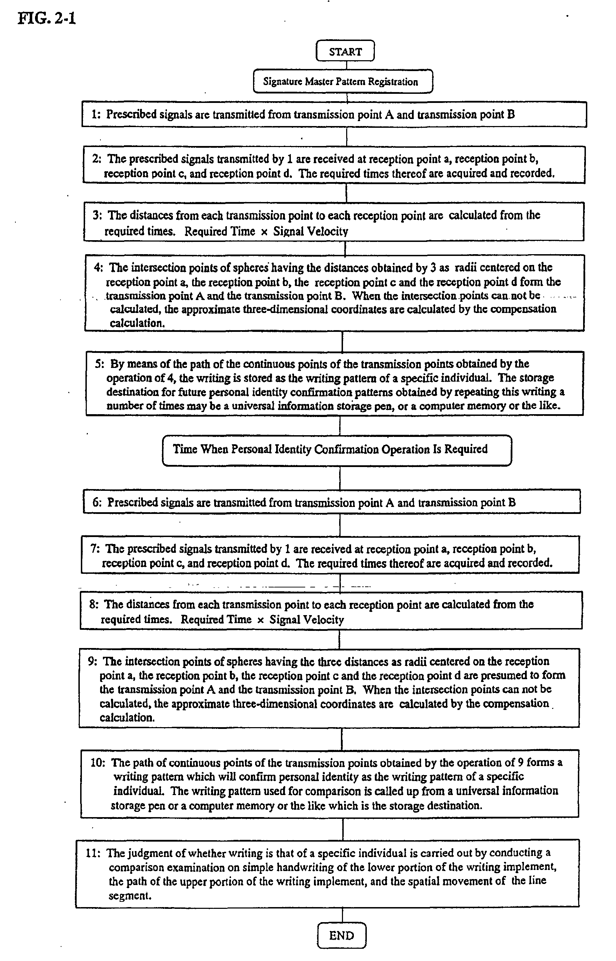

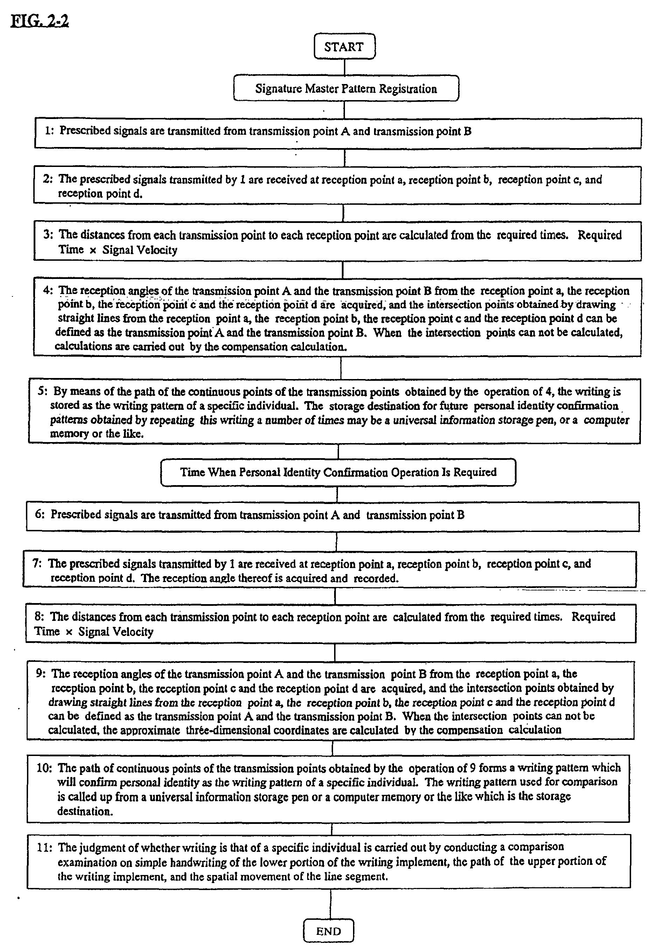

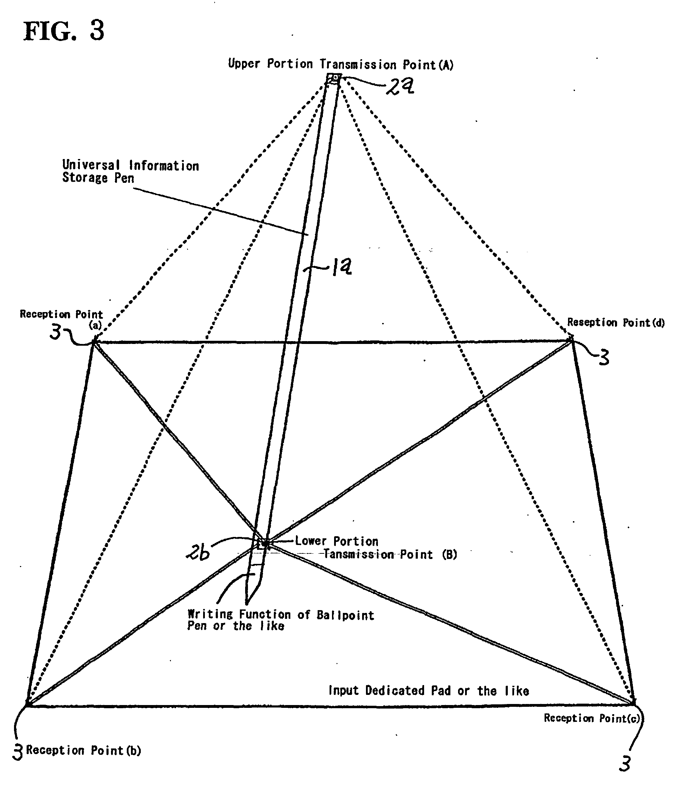

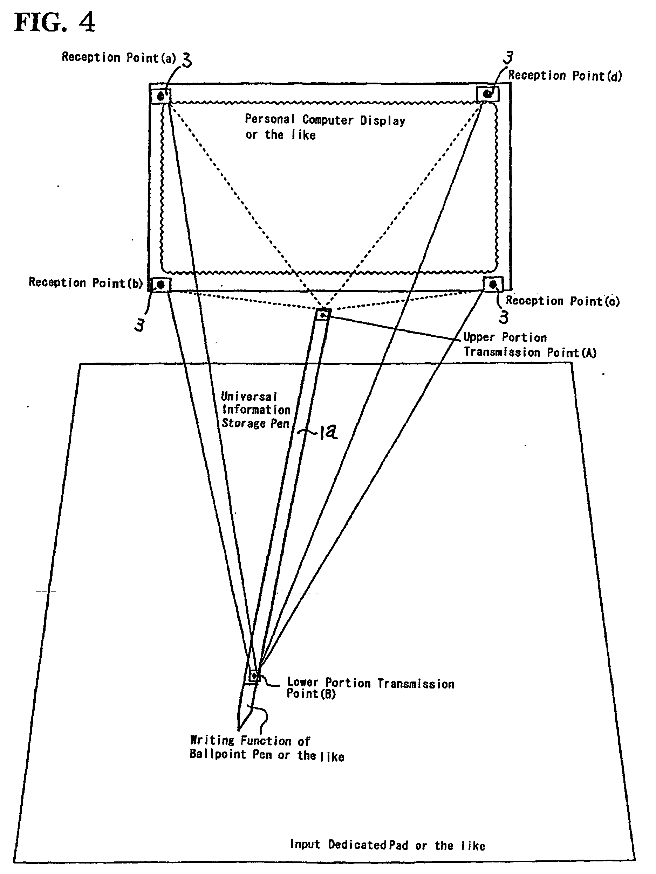

Fig. 2-1 is a process flowchart (in accordance with the explanatory drawings of Fig. 3 and Fig. 4) according to a spherical radial distance method of the personal identity confirmation system.
A flowchart of the time when the signature master pattern is registered is given below.

(1) Two-point prescribed signals are transmitted from a transmission point A and a transmission point B provided at the upper portion and the lower portion of a writing implement.

(2) At reception point a, reception point b, reception point c, and reception point d provided in the vicinity of the recording medium on which writing is carried out, the differences in the time it takes each reception point to receive the prescribed signals transmitted by the transmission point A and the transmission point B from the time of transmission by the transmission points are taken as required times, and these required times are recorded.

(3) The required times are multiplied by a prescribed number (signal velocity) to calculate the distances from each transmission point to each reception point.

(4) By means of the intersection points of three reception points formed by expanding the two-point interval distances calculated at (3) centered on the reception point a, the reception point b, the reception point c and the reception point d, the transmission point A or the transmission point B is calculated as a transmission point three-dimensional coordinate point in the same manner as GPS calculations of artificial satellites which calculate terrestrial points. For example, the position of the transmission point A is calculated by the following equations.

$$L_1{}^2 = (A_x - X_x)^2 + (A_y - X_y)^2 + (A_z - X_z)^2$$

$$L_2{}^2 = (A_x - Y_x)^2 + (A_y - Y_y)^2 + (A_z - Y_z)^2$$

$$L_3{}^2 = (A_x - Z_x)^2 + (A_y - Z_y)^2 + (A_z - Z_z)^2$$

Further, even though the transmission points are calculated for every three reception points, a compensation calculation is carried out by means of the average value of each intersection point.

(5) By means of the path of the continuous points of the transmission points obtained by the operation of (4), the writing is stored as the writing pattern of a specific individual. The storage destination for future personal identity confirmation patterns obtained by repeating this writing a number of times may be a universal information storage pen, or a computer memory or the like.

(6) Prescribed two-point signals are transmitted from the transmission point A and the transmission point B.

(7) At the reception point a, the reception point b, the reception point c and the reception point d, the differences in the time it takes each reception point to receive the prescribed signals transmitted by the transmission point A and the transmission point B from the time of transmission by the transmission points are taken as required times, and these required times are recorded.

(8) The required times are multiplied by a prescribed number (signal velocity) to calculate the distances from each transmission point to each reception point.

(9) A drawing expansion is carried out by using the distances calculated at (8) as radii for expanding spheres centered on said reception point a, reception point b, reception point c and reception point d, and the intersection points of the surface of each sphere form the coordinate points of the transmission point A and the transmission point B. When the intersection points can not be calculated, the approximate three-dimensional coordinates are calculated by the compensation calculation.

(10) The personal identity confirmation pattern is called up from a universal information storage pen or the computer memory of the user which is the storage destination of the writing pattern obtained by the operation of (9), and a comparison examination is carried out.

(11) The judgment of whether or not a signature is that of a specific individual is carried out by conducting a comparison examination on simple writing, the paths of the upper portion and the lower portion of the writing implement, the spatial movement of the two-point interval line segment of the upper portion and the lower portion of the writing implement, and the movement time.

Fig. 2-2 is a process flowchart (in accordance with the explanatory drawings of Fig. 3 and Fig. 4) according to a spherical radial distance method of the personal identity confirmation system according to the present invention.
A flowchart of the time when the signature master pattern is registered is given below.

(1) Two-point prescribed signals are transmitted from the transmission point A and the transmission point B provided at the upper portion and the lower portion of a writing implement.

(2) At reception point a, reception point b, reception point c, and reception point d provided in the vicinity of the recording medium on which writing is carried out, the differences in the time it takes each reception point to receive the prescribed signals transmitted by the transmission point A and the transmission point B from the time of transmission by the transmission points are taken as required times, and these required times are recorded.

(3) The required times are multiplied by a prescribed number (signal velocity) to calculate the distances from each transmission point to each reception point.

(4) The reception angles of the transmission point A and the transmission point B from the reception point a, the reception point b, the reception point c and the reception point d are acquired, and the intersection points obtained by drawing straight lines from the reception point a, the reception point b, the reception point c and the reception point d can be defined as the transmission point A and the transmission point B.

(5) By means of the path of the continuous points of the transmission points obtained by the operation of (4), the writing is stored as the writing pattern of a specific individual. The storage destination for future personal identity confirmation patterns obtained by repeating this writing a number of times may be a universal information storage pen, or a computer memory or the like.

A flowchart of the time when a personal identity confirmation operation is required is given below.

(1) Two-point prescribed signals are transmitted and written from the transmission point A and the transmission point B provided at the upper portion and the lower portion of a writing implement.

(2) At reception point a, reception point b, reception point c, and reception point d provided in the vicinity of the recording medium, the differences in the time it takes each reception point to receive the prescribed signals transmitted by the transmission point A and the transmission point B from the time of transmission by the transmission points are taken as required times, and these required times are recorded.

(3) The required times are multiplied by a prescribed number (signal velocity) to calculate the distances from each transmission point to each reception point.

(4) The reception angles of the transmission point A and the transmission point B from the reception point a, the reception point b, the reception point c and the reception point d are acquired, and the intersection points obtained by drawing straight lines from the reception point a, the reception point b, the reception point c and the reception point d can be defined as the transmission point A and the transmission point B.

When the intersection points can not be calculated, calculations are carried out by the compensation calculation.

(5) The personal identity confirmation pattern is called up from a universal information storage pen or the computer memory of the user which is the storage destination of the writing pattern obtained by the operation of (4), and a comparison examination is carried out.

(6) The judgment of whether or not a signature is that of a specific individual is carried out by conducting a comparison examination on simple writing, the paths of the upper portion and the lower portion of the writing implement, the spatial movement of the two-point interval line segment of the upper portion and the lower portion of the writing implement, and the movement time.

Fig. 3 is an explanatory drawing for describing the apparatus which recognizes signatures and the like of the personal identity confirmation system according to the present invention.

Transmission devices 2a, 2b are provided on an upper portion and a lower portion of a writing implement 1, and the tip portion of the lower portion is provided with a lower portion pen tip of a ballpoint pen. Signals are emitted from the transmission devices 2.

The reference number 3 indicates reception devices which are provided in the vicinity of the recording medium on which writing is carried out, for example at four corners of an input dedicated pad or the like. At least three of said reception devices 3 need to exhibit a reception function at the signature time.

Fig. 4 is an explanatory drawing for describing the apparatus which recognizes signatures and the like of the personal identity confirmation system according to the present invention.

Transmission devices 2a, 2b are provided on an upper portion and a lower portion of a writing implement 1, and the tip portion of the lower portion is provided with a lower portion pen tip of a ballpoint pen. Signals are emitted from the transmission devices 2.

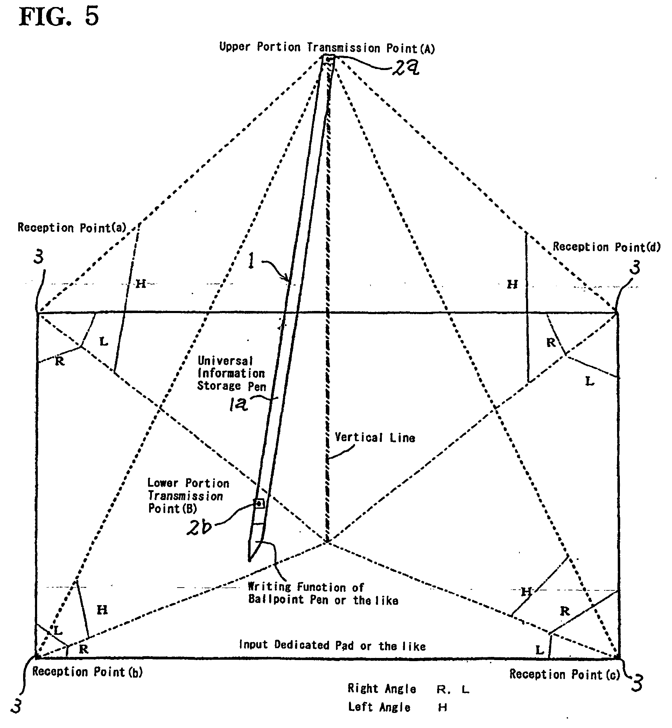

Fig. 5 is an explanatory drawing for describing the apparatus which recognizes signatures and the like of the personal identity confirmation system according to the present invention.

Transmitters 2a, 2b are provided on an upper portion and a lower portion of a writing implement 1, and the tip portion of the lower portion is provided with a lower portion pen tip of a ballpoint pen. Signals are emitted from the transmission devices 2.

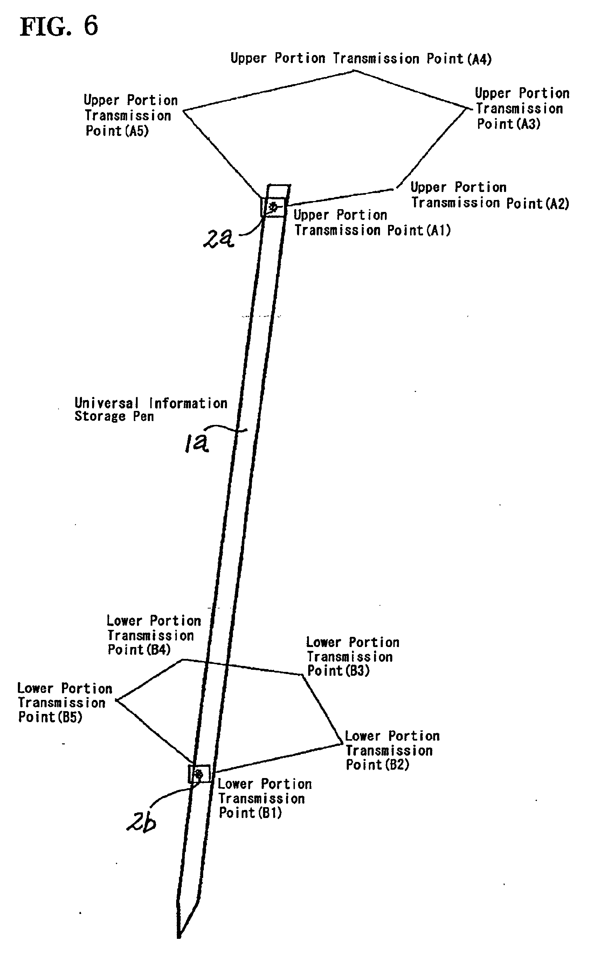

Fig. 6 is an explanatory drawing showing an example of the paths of the upper portion and the lower portion of a universal information storage pen 1a of the personal identity confirmation system according to the present invention. The distinctive feature lies in the fact that the upper portion of the pen and the lower portion of the pen acquire individual movement. Further, the temporal movement of the line segment connecting the transmission point (A) and the transmission point (B) is also stored as a movement having a distinctive feature.

**Claims**

1. A personal identity confirmation system, comprising transmission devices which transmit a signal such as a light signal or an electric signal or the like provided at the upper portion and the lower portion of a writing implement such as a ballpoint pen or the like, and a plurality of reception devices which receive the signals from said transmission devices provided in the vicinity of a recording medium on which writing is carried out, wherein the signals transmitted from said transmission devices are received by three or more reception devices as prescribed signals that include the arrival time at said reception devices due to the recognizable change in the wavelength or change in the frequency from the upper portion and the lower portion of said writing implement.

2. The personal identity confirmation system disclosed in Claim 1, wherein intersection points of spherical equations in which distances obtained by multiplying the calculated arrival times of each reception point in Claim 1 by the signal velocity form radii are calculated as three-dimensional coordinates in order to acquire writing features, and when said intersection points can not be calculated, the approximate three-dimensional coordinates are calculated by a compensation calculation, and the continuous paths thereof are calculated, and these continuous paths are stored as personal identity data, or the time of the changing paths of the intersection points in addition to said continuous paths are stored as personal identity data.

3. The personal identity confirmation system disclosed in Claim 1, wherein the calculated arrival times of each reception point in Claim 1 and the angle of the left and right upper portion and lower portion facing the vertical line between the transmission points and the reception points are measured in order to acquire writing features, and the intersection points of straight lines drawn toward the transmission points from the two lowest reception points are calculated as three-dimensional coordinates, and when said intersection points can not be calculated, the approximate three-dimensional coordinates are calculated by a compensation calculation, and the continuous paths thereof are calculated, and these continuous paths are stored as personal identity data, or the time of the changing paths of the intersection points in addition to said continuous paths are stored as personal identity data.

4. The personal identity confirmation system disclosed in Claim 2 or Claim 3, wherein the continuous path of the line segment from the upper portion transmission point of the writing implement to the lower portion transmission point of the writing implement calculated by Claim 2 or Claim 3 is calculated, and this continuous path is stored as personal identity data, or the time of the changing path of the line segment in addition to said continuous path are stored as personal identity data.

5. A personal identity confirmation system which calculates the handwriting of a person for which confirmation is required by any of the methods of Claim 1 through Claim 4 in the case where personal identity needs to undergo actual confirmation, compares such handwriting with previously stored personal identity data obtained by the personal identity confirmation system, and determines whether or not the handwriting is that of a specific individual.

6. A personal identity confirmation system which calculates the handwriting of a person for which confirmation is required by any of the methods of Claim 1 through Claim 4 in the case where personal identity needs to undergo actual confirmation, compares such handwriting with personal identity data previously stored on the Internet, and determines whether or not the handwriting is that of a specific individual.

Fig. 1

```
┌─────────────────────────────┐                    ┌──────────────────────────────────┐
│  Central  Processing Unit   │                    │  Main Memory Control  Program    │
└─────────────────────────────┘                    └──────────────────────────────────┘
```

┌──────────────────────────┐
│      Input Device        │
└──────────────────────────┘

┌─────────────────────────────────────────┐
│            File Device                   │
├─────────────────────────────────────────┤
│ Transmission Point Data File            │
│ Reception Point Data File               │
│ Three−Dimensional                       │
│ Signature Pattern Data File             │
│ Four−Dimensional                        │
│ Signature Pattern Data File             │
└─────────────────────────────────────────┘

┌──────────────────────────┐
│     Output Device        │
└──────────────────────────┘

┌───────────────────┐   ┌───────────────────┐
│  Transmission     │   │  Transmission     │
│  Device           │   │  Device           │
│  Transmission     │   │  Transmission     │
│  Point (A)        │   │  Point (B)        │
└───────────────────┘   └───────────────────┘

┌──────────────┐ ┌──────────────┐   ┌──────────────┐ ┌──────────────┐
│ Reception    │ │ Reception    │   │ Reception    │ │ Reception    │
│ Device       │ │ Device       │ ~ │ Device       │ │ Device       │
│ Reception    │ │ Reception    │   │ Reception    │ │ Reception    │
│ Point   (a)  │ │ Point  (b)   │   │ Point   (c)  │ │ Point   (d)  │
└──────────────┘ └──────────────┘   └──────────────┘ └──────────────┘

8

**FIG. 2-1**

```
┌─────────┐
│  START  │
└─────────┘
```

Signature Master Pattern Registration

1: Prescribed signals are transmitted from transmission point A and transmission point B

2: The prescribed signals transmitted by 1 are received at reception point a, reception point b, reception point c, and reception point d. The required times thereof are acquired and recorded.

3: The distances from each transmission point to each reception point are calculated from the required times. Required Time × Signal Velocity

4: The intersection points of spheres having the distances obtained by 3 as radii centered on the reception point a, the reception point b, the reception point c and the reception point d form the transmission point A and the transmission point B. When the intersection points can not be calculated, the approximate three-dimensional coordinates are calculated by the compensation calculation.

5: By means of the path of the continuous points of the transmission points obtained by the operation of 4, the writing is stored as the writing pattern of a specific individual. The storage destination for future personal identity confirmation patterns obtained by repeating this writing a number of times may be a universal information storage pen, or a computer memory or the like.

Time When Personal Identity Confirmation Operation Is Required

6: Prescribed signals are transmitted from transmission point A and transmission point B

7: The prescribed signals transmitted by 1 are received at reception point a, reception point b, reception point c, and reception point d. The required times thereof are acquired and recorded.

8: The distances from each transmission point to each reception point are calculated from the required times. Required Time × Signal Velocity

9: The intersection points of spheres having the three distances as radii centered on the reception point a, the reception point b, the reception point c and the reception point d are presumed to form the transmission point A and the transmission point B. When the intersection points can not be calculated, the approximate three-dimensional coordinates are calculated by the compensation calculation.

10: The path of continuous points of the transmission points obtained by the operation of 9 forms a writing pattern which will confirm personal identity as the writing pattern of a specific individual. The writing pattern used for comparison is called up from a universal information storage pen or a computer memory or the like which is the storage destination.

11: The judgment of whether writing is that of a specific individual is carried out by conducting a comparison examination on simple handwriting of the lower portion of the writing implement, the path of the upper portion of the writing implement, and the spatial movement of the line segment.

```
┌───────┐
│  END  │
└───────┘
```

## FIG. 2-2

START

Signature Master Pattern Registration

1: Prescribed signals are transmitted from transmission point A and transmission point B

2: The prescribed signals transmitted by 1 are received at reception point a, reception point b, reception point c, and reception point d.

3: The distances from each transmission point to each reception point are calculated from the required times. Required Time × Signal Velocity

4: The reception angles of the transmission point A and the transmission point B from the reception point a, the reception point b, the reception point c and the reception point d are acquired, and the intersection points obtained by drawing straight lines from the reception point a, the reception point b, the reception point c and the reception point d can be defined as the transmission point A and the transmission point B. When the intersection points can not be calculated, calculations are carried out by the compensation calculation.

5: By means of the path of the continuous points of the transmission points obtained by the operation of 4, the writing is stored as the writing pattern of a specific individual. The storage destination for future personal identity confirmation patterns obtained by repeating this writing a number of times may be a universal information storage pen, or a computer memory or the like.

Time When Personal Identity Confirmation Operation Is Required

6: Prescribed signals are transmitted from transmission point A and transmission point B

7: The prescribed signals transmitted by 1 are received at reception point a, reception point b, reception point c, and reception point d. The reception angle thereof is acquired and recorded.

8: The distances from each transmission point to each reception point are calculated from the required times. Required Time × Signal Velocity

9: The reception angles of the transmission point A and the transmission point B from the reception point a, the reception point b, the reception point c and the reception point d are acquired, and the intersection points obtained by drawing straight lines from the reception point a, the reception point b, the reception point c and the reception point d can be defined as the transmission point A and the transmission point B. When the intersection points can not be calculated, the approximate three-dimensional coordinates are calculated by the compensation calculation

10: The path of continuous points of the transmission points obtained by the operation of 9 forms a writing pattern which will confirm personal identity as the writing pattern of a specific individual. The writing pattern used for comparison is called up from a universal information storage pen or a computer memory or the like which is the storage destination.

11: The judgment of whether writing is that of a specific individual is carried out by conducting a comparison examination on simple handwriting of the lower portion of the writing implement, the path of the upper portion of the writing implement, and the spatial movement of the line segment.

END

# FIG. 3

Upper Portion Transmission Point(A)

~2a

Universal Information
Storage Pen

~1a

Reception Point
(a)
3

Reseption Point(d)

3

2b — Lower Portion
Tansmission Point (B)

Writing Function of Ballpoint
Pen or the like

Input Dedicated Pad or the like

Reception Point(c)

3 Reception Point(b)

3

# FIG. 4

Reception Point(a) 3

Reception Point(d)

Personal Computer Display
or the like

Reception Point(b)

Reception Point(c)

3

3

Upper Portion
Transmission Point(A)

Universal
Information
Storage Pen

1a

Lower Portion Transmission
Point(B)

Writing Function of
Ballpoint Pen or the like

Input Dedicated Pad or the like

# FIG. 5

Upper Portion Transmission Point(A)

2a

Reception Point(a)

3

Reception Point(d)

H

1

H

3

R

L

L

R

Universal
Information
Storage Pen

1a

Vertical Line

Lower Portion
Transmission
Point(B)

2b

Writing Function of
Ballpoint Pen or the like

H

L
R

Input Dedicated Pad or the like

H

R

L

Reception Point(b)

Reception Point(c)

3

3

Right Angle    R. L
Left Angle      H

## FIG. 6

Upper Portion Transmission Point(A4)

Upper Portion Transmission Point(A5)

Upper Portion Transmission Point(A3)

Upper Portion Transmission Point(A2)

Upper Portion Transmission Point(A1)

2a

Universal Information Storage Pen

1a

Lower Portion Transmission Point(B4)

Lower Portion Transmission Point(B3)

Lower Portion Transmission Point(B5)

Lower Portion Transmission Point(B2)

Lower Portion Transmission Point(B1)

2b

FIG. 7

## INTERNATIONAL SEARCH REPORT

| | International application No. |
|---|---|
| | PCT/JP00/08178 |

| A. CLASSIFICATION OF SUBJECT MATTER |
|---|
| Int.Cl⁷  G06T7/00, G06K9/00 |

According to International Patent Classification (IPC) or to both national classification and IPC

| B. FIELDS SEARCHED |
|---|
| Minimum documentation searched (classification system followed by classification symbols)<br>Int.Cl⁷  G06T7/00-7/20, G06K9/00-9/82, G06F3/03 |

Documentation searched other than minimum documentation to the extent that such documents are included in the fields searched

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| A | JP 11-312247 A (Nippon System Kaihatsu K.K.),<br>09 November, 1999 (09.11.1999),<br>Claim 3  (Family: none) | 1,2,4-6 |
| A | JP 8-320756 A (Sharp Corporation),<br>03 December, 1996 (03.12.1996),<br>Par. Nos. [0022] to [0023]  (Family: none) | 1,2,4-6 |
| A | JP 3-210622 A (Fujitsu, Ltd.),<br>13 September, 1991 (13.09.1991),<br>page 3, upper right column, line 18 to page 3, lower left<br>column, line 15  (Family: none) | 1,2,4-6 |
| A | US 5705993 A (Paul Alesu),<br>06 January, 1998 (06.01.1998),<br>column 1, line 66 to column 2, line 25<br>(Family: none) | 6 |

| ☐ Further documents are listed in the continuation of Box C. | ☐ See patent family annex. |
|---|---|

| * | Special categories of cited documents: | "T" | later document published after the international filing date or |
|---|---|---|---|
| "A" | document defining the general state of the art which is not considered to be of particular relevance | | priority date and not in conflict with the application but cited to understand the principle or theory underlying the invention |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>20 December, 2000 (20.12.00) | Date of mailing of the international search report<br>16 January, 2001 (16.01.01) |
|---|---|
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

| International application No. |
| --- |
| PCT/JP00/08178 |

**Box I    Observations where certain claims were found unsearchable (Continuation of item 1 of first sheet)**

This international search report has not been established in respect of certain claims under Article 17(2)(a) for the following reasons:

1. ☐ Claims Nos.:
   because they relate to subject matter not required to be searched by this Authority, namely:

2. ☒ Claims Nos.: 3
   because they relate to parts of the international application that do not comply with the prescribed requirements to such an
   extent that no meaningful international search can be carried out, specifically:

   > The description of the technique of "measurement of the angles of the left, right, upper, and lower parts with respect to a drooping line between the transmission point and the reception points" is unclear.

3. ☐ Claims Nos.:
   because they are dependent claims and are not drafted in accordance with the second and third sentences of Rule 6.4(a).

**Box II    Observations where unity of invention is lacking (Continuation of item 2 of first sheet)**

This International Searching Authority found multiple inventions in this international application, as follows:

1. ☐ As all required additional search fees were timely paid by the applicant, this international search report covers all searchable
   claims.

2. ☐ As all searchable claims could be searched without effort justifying an additional fee, this Authority did not invite payment
   of any additional fee.

3. ☐ As only some of the required additional search fees were timely paid by the applicant, this international search report covers
   only those claims for which fees were paid, specifically claims Nos.:

4. ☐ No required additional search fees were timely paid by the applicant. Consequently, this international
   search report is restricted to the invention first mentioned in the claims; it is covered by claims Nos.:

**Remark on Protest**    ☐    The additional search fees were accompanied by the applicant's protest.

☐    No protest accompanied the payment of additional search fees.

Form PCT/ISA/210 (continuation of first sheet (1)) (July 1992)